# EUROPEAN PATENT APPLICATION

(11) **EP 3 065 253 A1**
(43) Date of publication of application: **07.09.2016**
(21) Application number: 13896247.7
(22) Date of filing: 31.10.2013
(51) Int. Cl.: H02J 7/00

(54) **STORAGE BATTERY CHARGE/DISCHARGE PLANNING DEVICE, STORAGE BATTERY CHARGE/DISCHARGE PLANNING METHOD, PROGRAM, AND STORAGE BATTERY CHARGING/DISCHARGING DEVICE**

(71) Applicant: The Chugoku Electric Power Co., Inc., Hiroshima-shi, Hiroshima 730-8701 (JP)
(72) Inventor: NAITO, Masaki, Hiroshima-shi, Hiroshima 730-8701 (JP)
(74) Representative: Osha Liang
(86) International application number: PCT/JP2013/079542
(87) International publication number: WO 2015/063914

(57) **Abstract**

Included are a judging device configured to judge economic efficiency to be brought by charging and discharging of a storage battery based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot; and a determining device configured to determine a charge/discharge plan of the storage battery in the first and the second time slots based on a judgment result of the judging device.

## Description

### [Technical Field]

The present invention relates to a storage-battery charge/discharge planning device, a method for planning charge/discharge of the storage battery, a program, and a storage-battery charge/discharge device.

### [Background Art]

For example, there has been known a charge/discharge device that controls charging and discharging of a storage battery (for example, Patent Document 1).

### [Citation List]

### [Patent Document]

Patent Document 1: Japanese Patent Application Laid-open Publication No. 2011-244682

### [Summary of Invention]

### [Technical Problem]

For example, the charge/discharge device in Patent Document 1 controls charge and discharge of the storage battery based on a result of comparison between a sale price and a reference price of electric power. This control performed by the charge/discharge device, however, does not consider the charge/discharge efficiency of the storage battery. Thus, when the storage battery is charged and discharged by the charge/discharge device, economic advantages that is to be brought by virtue of charging and discharging of the storage battery may not be provided.

### [Solution to Problem]

In order to solve the above-described problems, a primary aspect of the invention is directed to a storage-battery charge/discharge planning device, including: a judging device configured to judge economic efficiency to be brought by charging and discharging of a storage battery, based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot; and a determining device configured to determine a charge/discharge plan of the storage battery in the first and the second time slots based on a judgment result of the judging device.

Other features of the present invention will become apparent from descriptions of the accompanying drawings and of the present specification.

### [Advantageous Effects of Invention]

According to the present invention, a charge/discharge plan of a storage battery can be determined, considering economic efficiency to be brought by charge and discharge of a storage battery performed based on charge/discharge efficiency.

### [Brief Description of the Drawings]

Fig. 1 is a diagram illustrating a distribution system according to first to third embodiments of the present invention.
Fig. 2 is a block diagram illustrating hardware of a charge/discharge control device of the first to third embodiments according to the present invention.
Fig. 3 is a block diagram illustrating the charge/discharge control device according to the first to third embodiments of the present invention.
Fig. 4 is a graph illustrating first price information according to the first embodiment of the present invention.
Fig. 5 is a diagram illustrating the first price information according to the first embodiment of the present invention.
Fig. 6 is a diagram illustrating second price information according to the first embodiment of the present invention.
Fig. 7 is a diagram illustrating a correspondence table according to the first embodiment of the present invention.
Fig. 8 is a diagram illustrating charge/discharge plan information according to the first embodiment of the present invention.
Fig. 9 is a flowchart illustrating an operation of a planning unit according to the first embodiment of the present invention.
Fig. 10 is a flowchart illustrating an operation of the charge/discharge control device according to the first embodiment of the present invention.
Fig. 11 is a flowchart illustrating an operation of a planning unit according to the second embodiment of the present invention.
Fig. 12 is a flowchart illustrating an operation of a planning unit according to the third embodiment of the present invention.

### [Description of Embodiments]

At least the following matters will become apparent from descriptions of the present specification and of the accompanying drawings.

### [First Embodiment]

### === Distribution System ===

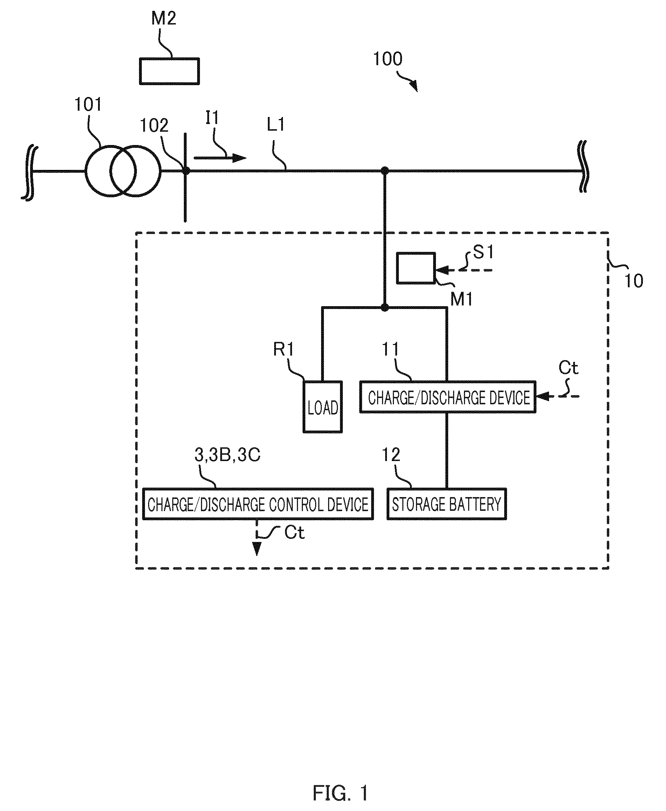

Hereinafter, a distribution system according to an embodiment of the present invention will be described with reference to Fig. 1. Fig. 1 is a diagram illustrating the distribution system according to an embodiment of the present invention. A plurality of consumers having configurations similar to a configuration of a consumer 10 are coupled to a distribution line L1. However, for convenience of explanation, only the single consumer 10 is illustrated.

A distribution system 100 is an electric power system to supply electric power to a load R1. The distribution system 100 includes a distribution transformer 101, the distribution line L1, and the consumer 10.

The distribution transformer 101 is a device that transforms a voltage on a primary side at a predetermined transformer ratio, to output the transformed voltage from a secondary side. Electric power is supplied from a power-transmission line to the primary side of the distribution transformer 101. One end of the distribution line L1 is coupled to the secondary side of the distribution transformer 101. The distribution line L1 extends downstream from the upstream one end thereof which is coupled to the secondary side of the distribution transformer 101.

The consumer 10 is, for example, an ordinary household to which electric power is supplied from the distribution line L1 and from which electric power is supplied to the distribution line L1. The consumer 10 includes a measuring device M1 (receiving device), a charge/discharge device 11, a storage battery 12, the load R1, and a charge/discharge control device 3 (storage battery charge/discharge device).

The load R1 is an electric power load that operates based on the electric power supplied from the distribution line L1 or the like.

The measuring device M1 is, for example, a smart meter that measures the electric power supplied from the distribution line L1 to the consumer 10 and measure the electric power supplied from the consumer 10 to the distribution line L1. Moreover, the measuring device M1 receives first price information S1 from, for example, an electric power supplier (not illustrated). The first price information S1 is information indicative of a price of electric power. The details of the first price information S1 will be described later.

The storage battery 12 is a storage battery that is charged with the electric power supplied from the distribution line L1, and is discharged to supply the electric power to the distribution line L1.

The charge/discharge device 11 is a device that charges and discharges the storage battery 12 in response to a control signal Ct.

The charge/discharge control device 3 plans charge and discharge of the storage battery 12 based on the first price information S1, which is received by the measuring device M1. The charge/discharge control device 3 outputs the control signal Ct based on the plan of charge and discharge of the storage battery 12.

### === Charge/Discharge Control Device ===

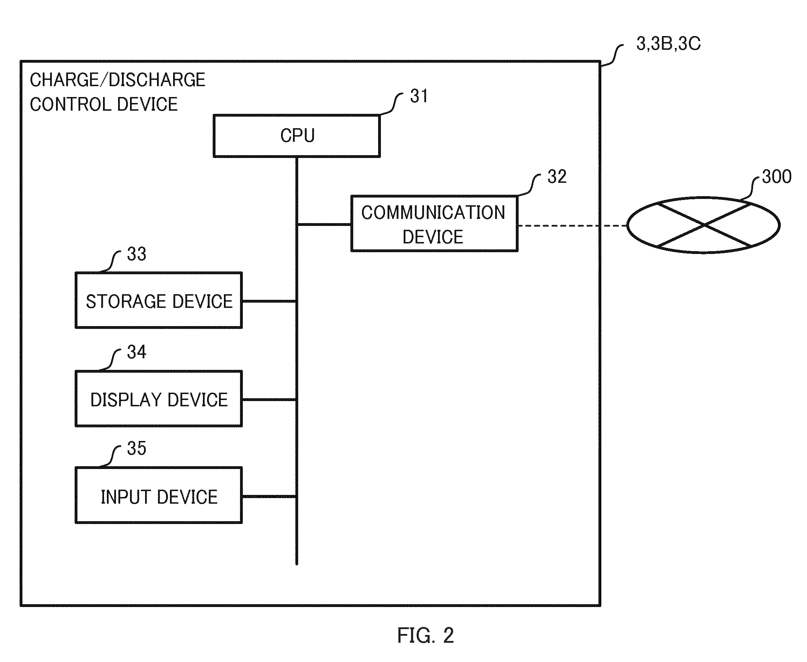

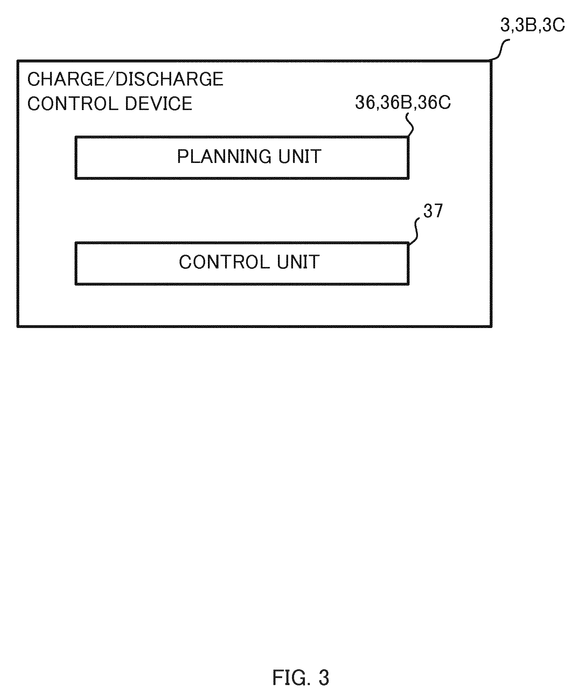

Hereinafter, a distribution system according to an embodiment of the present invention will be described with reference to Figs. 2 and 3. Fig. 2 is a block diagram illustrating hardware of the charge/discharge control device according to an embodiment of the present invention. Fig. 3 is a block diagram illustrating the charge/discharge control device according to an embodiment of the present invention.

The charge/discharge control device 3 includes a Central Processing Unit (CPU) 31, a communication device 32, a storage device 33, a display device 34, and an input device 35. The CPU 31 executes a program stored in the storage device 33, to perform various functions of the charge/discharge control device 3, and integrally control the charge/discharge control device 3. The storage device 33 stores the above-described program and various pieces of information. The display device 34 is a display that displays information of the charge/discharge control device 3. The input device 35 is, for example, a keyboard and a computer mouse through which information is input to the charge/discharge control device 3. The communication device 32 performs communications between the measuring device M1 and the charge/discharge device 11.

The charge/discharge control device 3 further includes a planning unit 36 (judging device, determining device, and storage-battery charge/discharge planning device) and a control unit 37 (also referred to as "various functions of the charge/discharge control device 3"). Note that the various functions of the charge/discharge control device 3 are realized by execution of the program stored in the storage device 33 by the CPU 31.

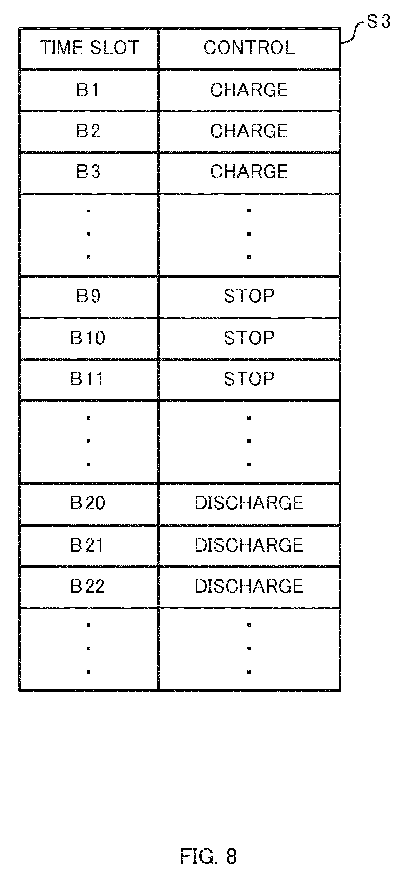

The planning unit 36 creates charge/discharge plan information S3 (Fig. 8) based on the first price information S1. The control unit 37 (control device) causes the control signals Ct to be output based on the charge/discharge plan information S3. The details of the planning unit 36 and the control unit 37 will be described later.

### === First Price Information ===

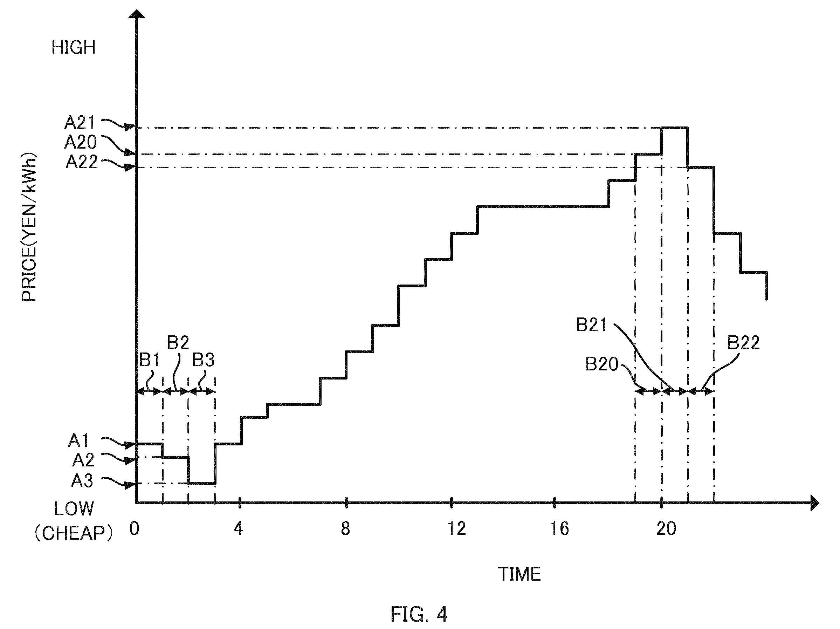

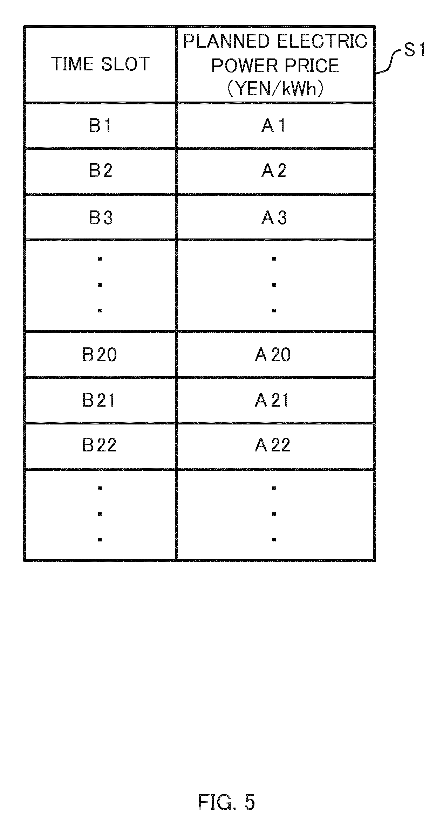

Hereinafter, the first price information according to an embodiment of the present invention will be described with reference to Figs. 4 and 5. Fig. 4 is a graph illustrating the first price information according to an embodiment of the present invention. Fig. 5 is a diagram illustrating the first price information according to an embodiment of the present invention.

The first price information S1 indicates planned values of electric power prices in future based on real-time pricing. Note that the real-time pricing means, for example, an electric power rate system where electric power prices vary by time slot of e.g., one hour during a day. The electric power price means a price of electric power supplied from the consumer 10 to the distribution line L1 (also referred to as a "electric power for sale") and a price of the electric power supplied from the distribution line L1 to the consumer 10 (also referred to as a "electricpower for purchase"). In the first price information S1, the prices of the electric power for sale and the prices of the electric power for purchase are the same. That is, the first price information S1 indicates that both the price of the electric power for sale in the time slot B1 and the price of the electric power for purchase in the time slot B1 are A1, and other information.

In the first price information S1, the time slots are associated with the planned values of the electric power prices, respectively. That is, the first price information S1 includes a plurality of combinations of the time slots and the planned values of the electric power prices which are associated with these time slots. The first price information S1 indicates that the planned value of the electric power price (referred to as a "planned electric power price") in the time slot B1, which is from 12 a.m. to 1 a.m., is A1, the planned electric power price in the time slot B2, which is from 1 a.m. to 2 a.m., is A2, and the planned electric power price in the time slot B3, which is from 2 a.m. to 3 a.m., is A3. Further, the first price information S1 indicates that the planned electric power price in the time slot B20, which is from 7 p.m. to 8 p.m., is A20, the planned electric power price in the time slot B21, which is from 8 p.m. to 9 p.m., is A21, and the planned electric power price in the time slot B22, which is from 9 p.m. to 10 p.m., is A22.

Note that the first price information S1 in Fig. 5, for example, includes the planned electric power prices for 24 hours. However, for convenience of explanation, the description of the planned electric power prices in time slots other than the time slots B1 to B3 and B20 to B22 is omitted.

### === Planning Unit ===

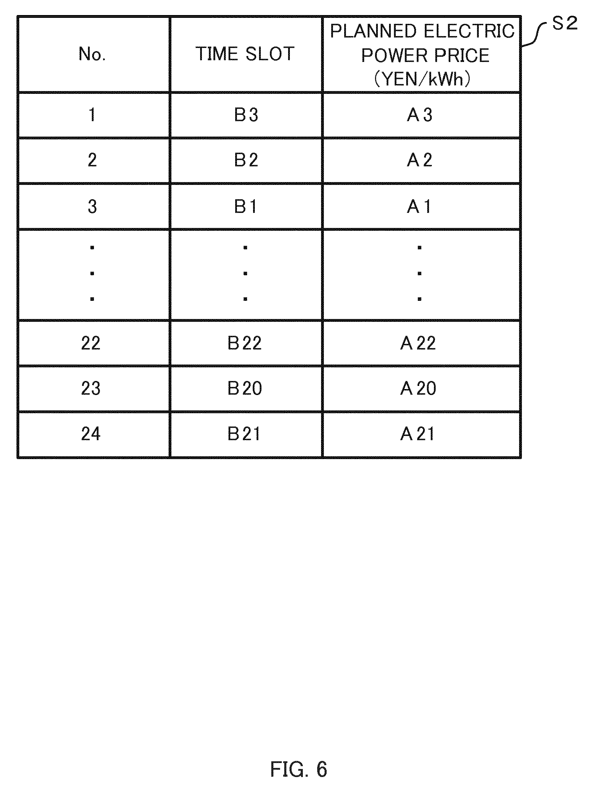

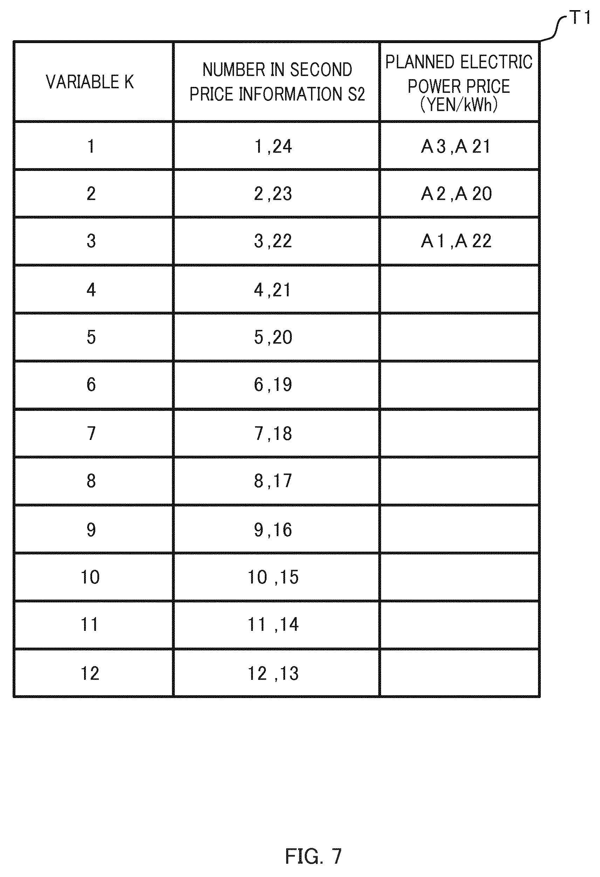

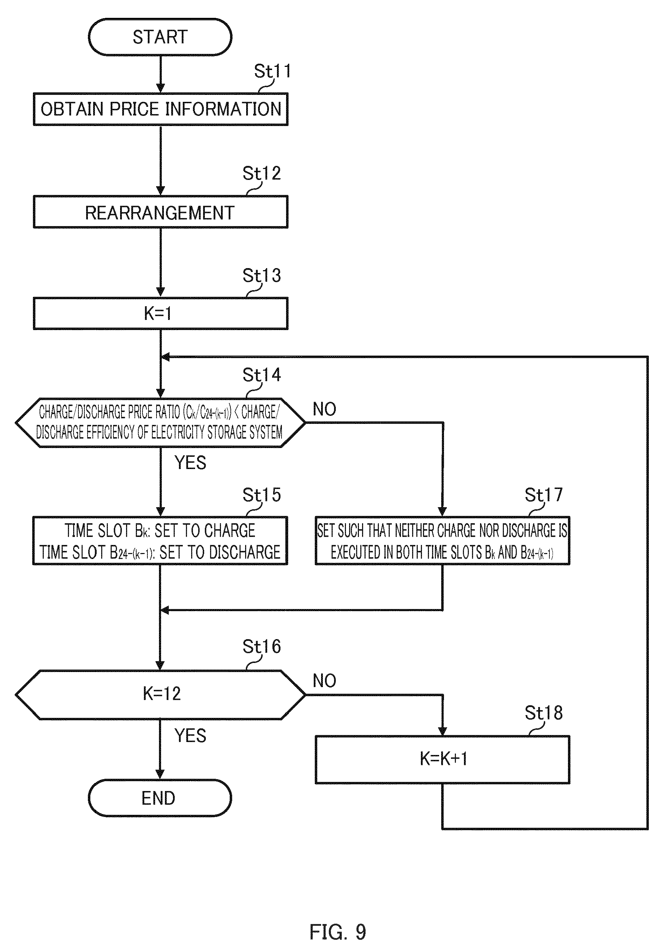

Hereinafter, the planning unit according to an embodiment of the present invention will be described with reference to Figs. 5 to 9. Fig. 6 is a diagram illustrating second price information according to an embodiment of the present invention. Note that second price information S2 includes information corresponding to Nos. 1 to 24. However, for convenience of explanation, the description of information corresponding to Nos. 4 to 21 is omitted. Fig. 7 is a diagram illustrating a correspondence table according to an embodiment of the present invention. Fig. 8 is a diagram illustrating charge/discharge plan information according to an embodiment of the present invention. Fig. 9 is a flowchart illustrating an operation of the planning unit according to an embodiment of the present invention.

### <Outline>

The planning unit 36, after rearranging the first price information S1, selects a pair of time slots to set a charge/discharge plan in the selected pair of time slots. The planning unit 36 sets the charge/discharge plan, for example, of all the time slots for 24 hours in the first price information S1. The planning unit 36 creates charge/discharge plan information S3 in which the settings of the charge/discharge plan have been reflected.

### <Detail>

The planning unit 36 obtains the first price information S1 (Step St11). The planning unit 36 sorts the combinations of the time slots and the planned electric power prices, which correspond to these time slots, in the first price information S1, in the order of ascending planned electric power prices, to create the second price information S2 (Step St12). In the second price information S2, the lowest planned electric power price combination is associated with No. 1, and the highest planned electric power price combination is associated with No. 24.

The planning unit 36 sets 1 as a value of a variable K (Step St13). Note that the variable K is used to select a pair of planned electric power prices from the second price information S2. The values of the variable K correspond to numbers indicated in the second price information S2.

The planning unit 36 selects a pair of planned electric power prices from the second price information S2 based on the value of the variable K being 1. Note that the planning unit 36 selects apair of planned electric power prices from the second price information S2 based on the value of the variable K and a correspondence table T1. In the correspondence table T1, the values of the variable K are associated with the numbers in the second price information S2.

Specifically, the planning unit 36 selects A3, which corresponds to No. 1 in the second price information S2, and A21, which corresponds to No. 24. Note that, when the value of the variable K is 2, A2, which corresponds to No. 2 in the second price information S2, and A20, which corresponds to No. 23, are selected. Alternatively, when the value of the variable K is 3, A1 which corresponds to No. 3 in the second price information S2, andA22 which corresponds to No. 22, are selected. When the values of the variable K are 4 to 12, the planned electric power prices are selected similarly to the cases where the values of the variable K are 1 to 3.

The planning unit 36 calculates a charge/discharge price ratio based on the selectedpair of planned electric power prices. Specifically, the planning unit 36 employs, as the charge/discharge price ratio when the value of the variable K is 1, a result of division performed using A3, which is a lower one of the pair of planned electric power prices, as a dividend, and A21, which is a higher planned electric power price, as a divisor.

Cₖ and C₂₄₋₍ₖ₋₁₎ at Step St14 correspond to the planned electric power price in the second price information S2. The "k" in Cₖ and C₂₄₋₍ₖ₋₁₎ corresponds to the variable K. For example, when the value of the variable K is 1, Cₖ at Step St14 is C₁ and C₂₄₋₍ₖ₋₁₎ is C₂₄. At this time, the index of C corresponds to a number in the second price information S2. Accordingly, C₁ and C₂₄ indicate A3 and A21 in the second price information S2, respectively. That is, for example, when the value of the variable K is 1, Cₖ indicates A3, and C₂₄₋₍ₖ₋₁₎ indicates A21. Further, for example, when the value of the variable K is 2, Cₖ indicates A2, and C₂₄₋₍ₖ₋₁₎ indicates A20.

The planning unit 36 determines (judges) whether the charge/discharge price ratio is smaller than charge/discharge efficiency of an electricity storage system (also referred to as "charge/discharge efficiency") or not (Step St14).

The charge/discharge efficiency is a product of charge efficiency ***p*** when the storage battery 12 is charged with electric power and discharge efficiency ***q*** when the storage battery 12 charged with electric power is discharged. For example, the charge efficiency ***p*** of 0.9 means that, when the electric power of 1 (kWh) is supplied to the storage battery 12, electric power corresponding to 0.9 (kWh), which is equivalent to 0.9 times of 1 (kWh), is charged. Further, for example, the discharge efficiency ***q*** of 0.9 means that, when the electric power corresponding to 1 (kWh) has been charged to the storage battery 12 and the electric power charged to the storage battery 12 is all discharged, the electric power of 0.9 (kWh), which is equivalent to 0.9 times of 1 (kWh), is output from the storage battery 12.

Step St14 determines whether or not the charging and discharging of the storage battery 12 in the time slot corresponding to the selected pair of planned electric power prices bring an economic advantage for the consumer 10. For example, the following describes an example of the economic advantage in the case where the charge efficiency ***p*** is 0.9 and the discharge efficiency ***q*** is 0.89.

For example, in order to output electric power of 1 (kWh), the electric power corresponding to 1.125 (kWh) (corresponding to 1 (kWh) ÷ 0.89) needs to be charged to the storage battery 12. In order to charge the electric power corresponding to 1.125 (kWh) to the storage battery 12, electric power corresponding to 1.25 (kWh) (corresponding to 1.125 (kWh) ÷ 0.9) needs to be supplied to the storage battery 12. In this occasion, for example, in the case where electricity is sold by discharging the storage battery 12 at the time of the planned electric power price of 12.5 yen, and considering that the charge/discharge efficiency is about 0.8 (0.9 × 0.89), the economic advantages are to be brought when the electricity of 1.25 (kWh) is purchased at the time of the planned electric power price of 10 yen or less and the storage battery 12 is charged with this electric power.

Note that "selling electricity" means that the consumer 10 supplies electric power to the distribution line L1 to sell this electric power to electric power companies or the like. When the electricity is sold, the electric power company pays consideration to the consumer 10 based on the electric power price, the sold electric energy, etc. "Purchasing electricity" means that the consumer 10 purchases electric power from the electric power company or the like so that the electric power is supplied from the distribution line L1. When the electricity is purchased, the consumer 10 pays consideration to the electric power company based on the electric power price, the purchased electric energy, etc. When a difference value of the price paid in purchasing electricity with respect to the price that the consumer 10 obtains in selling electricity is, for example, larger than a predetermined value (e.g., 0), the economic advantage is to be provided by charging and discharging the storage battery 12. If this difference value is smaller than the predetermined value (e.g., 0), the economic advantage is not to be provided by charging and discharging the storage battery 12.

For example, when it is determined (judged) at Step St14 that the charge/discharge price ratio is smaller than the charge/discharge efficiency (YES at Step St14), the planning unit 36 sets a charge control or a discharge control in the time slot corresponding to the selected pair of planned electric power prices, considering that the economic advantage for the consumer 10 will be provided. Specifically, the planning unit 36 sets charge control in the time slot B3 corresponding to A3 which is a lower one of the pair of planned electric power prices, and sets discharge control in the time slot B21 corresponding to A21 which is a higher planned electric power price (Step St15). At this time, the planning unit 36 reflects the setting results in the charge/discharge plan information S3.

Meanwhile, for example, when it is determined (judged) at Step St14 that the charge/discharge price ratio is smaller than the charge/discharge efficiency (NO at Step St14), the planning unit 36 sets stop control in both the time slots corresponding to the selected pair of planned electric power prices, considering that the economic advantage for the consumer 10 will not be provided (Step St17). At this time, the planning unit 36 reflects the setting results in the charge/discharge plan information S3. Note that the charge control means charging the storage battery 12, the discharge control means discharging the storage battery 12, and the stop control means that neither charging nor discharging of the storage battery 12 is executed.

That is, at Step St14, the planning unit 36 judges the economic efficiency (economic advantage) to be brought by charging and discharging of the storage battery 12. Then, the planning unit 36 determines the charge/discharge plan in the time slot corresponding to the pair of planned electric power prices, based on this judgment result of the economic efficiency.

The planning unit 36 determines whether the value of the variable K is 12 or not (Step St16). For example, when the planning unit 36 determines that the value of the variable K is not 12 (NO at Step St16), the planning unit 36 adds 1 to the value of the variable K (Step St18) and executes the determination at Step St14 again, considering that the control has not yet been set to all the time slots in the second price information S2. Meanwhile, for example, when the planning unit 36 determines that the value of the variable K is 12 (YES at Step St16), the planning unit 36 ends the operation considering that the control has been set to all the time slots in the second price information S2.

When the planning unit 36 ends the operation, the charge/discharge plan information S3 is to have been created. The charge/discharge plan information S3 indicates that the storage battery 12 is controlled so as to be charged and discharged in the time slots B1 andB20, respectively, and the storage battery 12 is neither charged nor discharged in the time slot B9, and other information.

Note that the storage device 33 may store information indicative of the first price information S1, the second price information S2, the charge/discharge plan information S3, and the correspondence table T1.

### === Control Unit ===

Hereinafter, the control unit according to an embodiment of the present invention will be described with reference to Fig. 8.

The control unit 37 causes the control signal Ct to be output based on the charge/discharge plan information S3 and the current time slot. The control unit 37 causes the control signal Ct corresponding to the current time slot to be output.

For example, when the current time slot is the time slot B1, the control unit 37 causes the control signal Ct for charging the storage battery 12 to be output. At this time, the charge/discharge device 11 charges the storage battery 12 with the purchased electric power, which is supplied from the distribution line L1 to the consumer 10.

Alternatively, for example, when the current time slot is the time slot B9, the control unit 37 causes the control signal Ct for neither charging nor discharging the storage battery 12 to be output. At this time, the charge/discharge device 11 electrically disconnects the storage battery 12 from the distribution line L1 and the load R1, to stop charge and discharge of the storage battery 12.

Alternatively, for example, when the current time slot is the time slot B20, the control unit 37 causes the control signal Ct for discharging the storage battery 12 to be output. At this time, the charge/discharge device 11 discharges the storage battery 12 and supplies the electric power output by such discharge to the distribution line L1, to sell the electricity. Note that, at this time, the storage battery 12 may be electrically disconnected from the load R1, such that all the electric power discharged from the storage battery 12 is supplied to the distribution line L1.

### === Operation ===

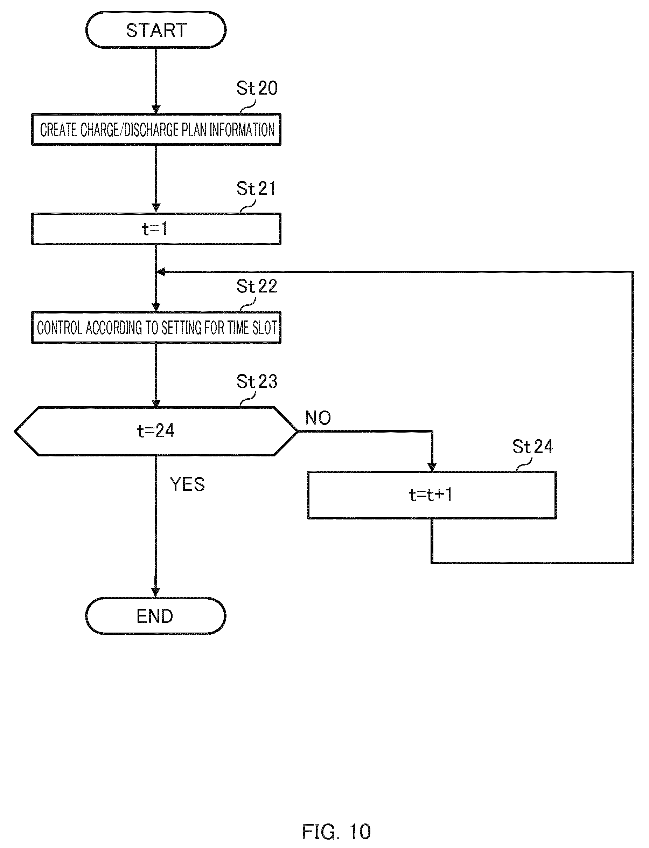

Hereinafter, an operation performed by the charge/discharge control device according to an embodiment of the present invention will be described with reference to Figs. 1 to 8, and Fig. 10. Fig. 10 is a flowchart illustrating an operation of the charge/discharge control device according to an embodiment of the present invention. It is assumed that the variable ***t*** indicates a time slot in a day during which the charge/discharge control device 3 performs control. For example, it is assumed that the variable ***t*** of the value of 1, 2, 3, or the like indicates the time slot B1, B2, B3, or the like, respectively.

As described above, the charge/discharge control device 3 creates the charge/discharge plan information S3 (Step St20). The charge/discharge control device 3, for example, creates the charge plan information S3 on the previous day of performing the operations of Steps St21 to St24.

The charge/discharge control device 3 sets 1 as the value of the variable ***t*** (Step St21). This indicates that the current time slot is the time slot B1 in the charge/discharge plan information S3. The charge/discharge control device 3 performs control according to the time slot corresponding to the value of the variable ***t*** (Step St22). Specifically, for example, when the value of the variable ***t*** is 1, the charge/discharge control device 3 performs charge control corresponding to the time slot B1 in the charge/discharge plan information S3. In this case, the charge/discharge control device 3 outputs the control signal Ct to charge the storage battery 12. The charge/discharge device 11 that has received this control signal Ct charges the charge device 12 during the time slot B1. Note that the charge/discharge device 11 charges the storage battery 12 within a range of contracted electric power.

Here, the contracted electric power means the maximum value of the electric energy that is agreed between, for example, the consumer 10 and the electric power company and is supplied from the distribution line L1 to the consumer 10. The following description will be given assuming that that contracted electric power has been determined as 40 (kWh). To "charge the storage battery 12 within a range of contracted electric power" means that the charge/discharge device 11 charges the storage battery 12 in a state where the electric energy supplied from the distribution line L1 to the consumer 10 is being kept within 40 (kWh). For example, when power consumption of the load R1 is 30 (kWh), the charge/discharge device 11 supplies electric power at electric energy of 10 (kWh) or less to the storage battery 12, to charge the storage battery 12. The power consumption of the load R1 and the electric energy of the electric power supplied to the storage battery 12 maybe measured by, for example, the measuring device M1. In this case, the charge/discharge device 11 may charge the storage battery 12 based on the measurement result measured by the measuring device M1.

The charge/discharge control device 3 determines whether the value of the variable ***t*** is 24 or not (Step St23). When the charge/discharge control device 3 determines that the value of the variable ***t*** is 24 (YES at Step St23), the charge/discharge control device 3 ends the operation, considering that the control has been ended in all the time slots in the charge/discharge plan information S3. When the charge/discharge control device 3 determines that the value of the variable ***t*** is not 24 (NO at Step St23), the charge/discharge control device 3 adds 1 to the value of the variable ***t*** (Step St24), performs the operation at Step St22, and performs determination at Step St23 again, considering that the control has not been ended in all the time slots in the charge/discharge plan information S3.

Note that when the value of the variable ***t*** is 9 at Step St22, the charge/discharge control device 3 performs the stop control corresponding to the time slot B9 in the charge/discharge plan information S3. In this case, the charge/discharge control device 3 outputs the control signal Ct for preventing both charging and discharging of the storage battery 12. As described above, the charge/discharge device 11 that has received this control signal Ct, stops charge and discharge of the storage battery 12.

Alternatively, when the value of the variable ***t*** is 20 at Step St22, the charge/discharge control device 3 performs discharge control corresponding to the time slot B20 in the charge/discharge plan information S3. In this case, the charge/discharge control device 3 outputs the control signal Ct to discharge the storage battery 12. The charge/discharge device 11 that has received this control signal Ct discharges the storage battery 12 and supplies the electric power output by this discharge to the distribution line L1, to sell the electricity. Note that the charge/discharge device 11 discharges the storage battery 12 within a range in which an adverse current does not occur in the distribution line L1.

Here, the adverse current means a reverse power flow of the electric power supplied from downstream of the distribution line L1 to upstream of the distribution line L1. When the adverse current occurs, for example, the adverse current may possibly causes a failure of the distribution transformer 101 or the like. Thus, it is preferable that, when the consumer 10 supplies electric power to the distribution line L1, the electric power is supplied within the range in which the adverse current is not caused in the distribution line L1. For example, it is assumed that the distribution system 100 includes an ammeter M2 that measures a current I1 flowing through a transmission end 102 at the distribution line L1 from the upstream to the downstream. For example, it is assumed that, while the adverse current does not occur, the value of the current I1 is positive and while the adverse current occurs, the value of the current I1 is negative.

Based on the measurement result measured by the ammeter M2 or the like, the charge/discharge device 11 determines the maximum value of the electric energy (also referred to as a "maximum electric energy") that can be supplied from the consumer 10 to the distribution line L1 within the range in which the adverse current does not occur. Specifically, the charge/discharge device 11 determines the maximum electric energy based on, for example, a difference between a positive value of the current I1, which is indicated by the measurement result by the ammeter M2, and a predetermined value (e.g., 0). Note that, for example, the charge/discharge device 11 may determine a value corresponding to a product of this difference and a voltage of the distribution line L1 as the maximum electric energy. Note that when the value of the current I1 indicated by the measurement result by the ammeter M2 is negative, the charge/discharge device 11 may determine the maximum electric energy as 0. Then, discharging the storage battery 12 within a range in which the adverse current does not occur in the distribution line L1 means, for example, when the maximum electric energy is determined as 30 (kWh), the charge/discharge device 11 discharges the storage battery 12 so that the electric energy supplied from the consumer 10 to the distribution line L1 is kept within 30 (kWh).

### [Second Embodiment]

In a charge/discharge control device 3B (Fig. 1) according to a second embodiment, the planning unit 36 in the charge/discharge control device 3 according to the first embodiment is changed into a planning unit 36B. A configuration other than the planning unit 36B in the charge/discharge control device 3B is similar to that in the charge/discharge control device 3.

### === Planning Unit ===

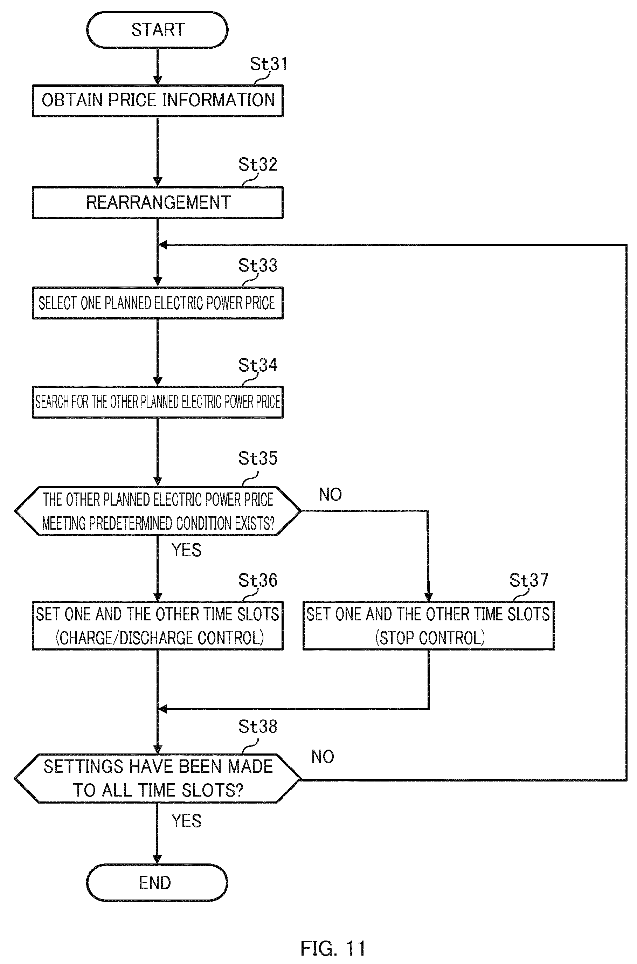

Hereinafter, the planning unit according to an embodiment of the present invention will be described with reference to Figs. 1, 3, and 11. Fig. 11 is a flowchart illustrating an operation of the planning unit according to an embodiment of the present invention.

The charge/discharge control device 3B (storage-battery charge/discharge device) includes the planning unit 36B (judging device, determining device, and storage-battery charge/discharge planning device).

### <Outline>

The planning unit 36B, after rearranging the first price information S1, selects one planned electric power price and searches for the other planned electric power price meeting a predetermined condition in association with the selected one planned electric power price. The planning unit 36B sets a charge/discharge plan based on the search result, to create the charge/discharge plan information S3.

### <Detail>

The planning unit 36B performs operations at Steps St31 and St32. Note that the operations of Steps St31 and 32 are similar to the operations of Steps St11 and St12, respectively. The planning unit 36B selects a planned electric power price from the second plan information S2 as one planned electric power price (Step St33). Note that the one planned electric power price is, for example, such a planned electric power price that the discharge control is set in the time slot associated with the one planned electric power price when the one planned electric power price meets the predetermined condition in association with the other planned electric power price. For example, the planning unit 36B selects A22 as the one planned electric power price. Note that, in the second price information S2, any of the planned electric power prices may be selected as the one planned electric power price.

The planning unit 36B searches for a planned electric power price that meets the predetermined condition in association with the A22, which is selected as the one planned electric power price, from the second price information S2 (Step St34). The predetermined condition is the condition described at Step St14. The charge/discharge price ratio is a result of division performed using the other planned electric power price, which is lower one of the one and the other planned electric power prices, as a dividend and the higher one as a divisor.

The planning unit 36B determines whether the other planned electric power price is present or not (Step St35). For example, it is assumed that the predetermined condition is met between A1 andA22 in the secondprice information S2, that is, for example, it is assumed that the operation result of A1 ÷ A22 is smaller than the charge/discharge efficiency of the electricity storage system. In such a case, the planning unit 36B determines that the other planned electric power price is present (YES at Step St35). Then, the planning unit 36B makes a setting such that the discharge control is to be performed in the time slot B22, which corresponds to A22 serving as the one planned electric power price, and makes a setting such that the charge control is to be performed in the time slot B1, which corresponds to A1 serving as the other planned electric power price. Then, the planning unit 36B reflects these setting results in the charge/discharge plan information S3 (Step St36).

In the determination at Step St35, for example, when the planning unit 36B determines that the other planned electric power price is absent (NO at Step St35), the stop control is set in the time slot B22, which corresponds to A22, and in a time slot other than A22, for example, the time slot B2, which corresponds to A2. Then, the planning unit 36B reflects these setting results in the charge/discharge plan information S3 (Step St37).

The planning unit 36B determines whether settings with respect to control have been made to all the time slots in the secondprice information S2 or not (Step St38). When the planning unit 36B determines that the settings with respect to control have been made to all the time slots (YES at Step St38), the planning unit 36B ends the operation. When the planning unit 36B determines that the settings with respect to control have not been made to all the time slots (NO at Step St38), the planning unit 36B performs the determination at Step St35 again, after performing the operations of Steps St33 and St34.

### [Third Embodiment]

In a charge/discharge control device 3C (Fig. 1) according to a third embodiment, the planning unit 36 in the charge/discharge control device 3 according to the first embodiment is changed into a planning unit 36C. A configuration other than the planning unit 36C in the charge/discharge control device 3C is similar to that in the charge/discharge control device 3.

### === Planning Unit ===

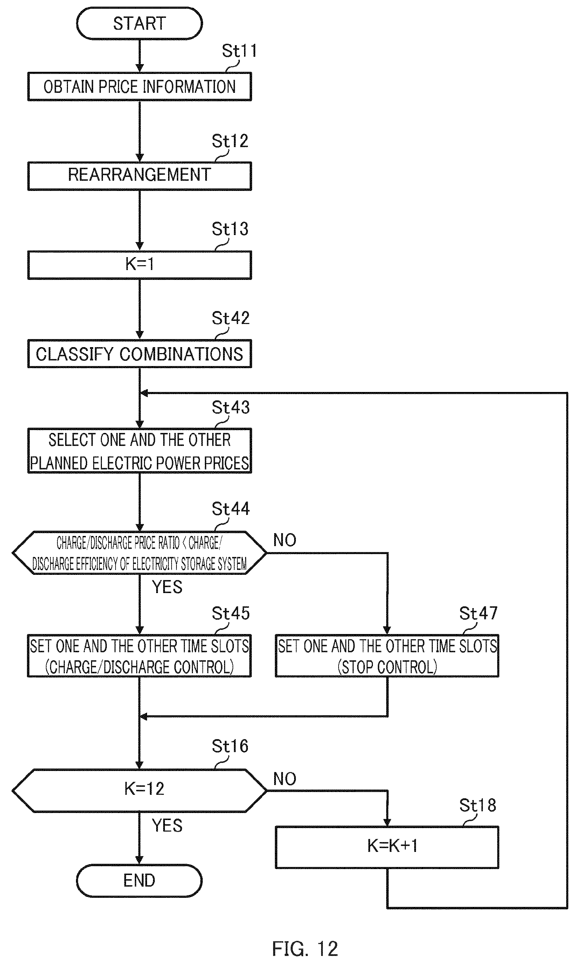

Hereinafter, the planning unit according to an embodiment of the present invention will be described with reference to Figs. 1, 3, and 12. Fig. 12 is a flowchart illustrating an operation of the planning unit according to an embodiment of the present invention.

The charge/discharge control device 3C (storage-battery charge/discharge device) includes theplanningunit 36C (judging device, determining device, and storage-battery charge/discharge planning device).

### <Outline>

The planning unit 36C, after rearranging the first price information S1, selects one and the other planned electric power prices. The planning unit 36C sets charge/discharge plans in the one and the other time slots corresponding to the selected one and the other planned electric power prices, respectively. The planning unit 36C sets the charge/discharge plan, for example, in all the time slots for 24 hours in the first price information S1. The planning unit 36C creates the charge/discharge plan information S3 in which the settings of the charge/discharge plan have been reflected.

### <Details>

The planning unit 36C classifies combinations of the time slots and the planned electric power prices corresponding to these time slots in the second price information S2 into first and second groups based on the planned electric power prices (Step St42). Specifically, for example, the combinations corresponding to Nos. 1 to 12 in the second price information S2 form the first group and the combinations corresponding to Nos. 13 to 24 form the second group.

The planning unit 36C selects the one planned electric power price and the other planned electric power price from the second price information S2 (Step St43). Specifically, for example, the planning unit 36C selects the other planned electric power price from the planned electric power prices in the first group and selects the one planned electric power price from the planned electric power prices in the second group.

The planning unit 36C determines (judges) whether the one and the other planned electric power prices selected at Step St43 are to bring the economic advantage or not (Step St44). Specifically, the planning unit 36C determines whether the charge/discharge price ratio is smaller than the charge/discharge efficiency or not (Step St44). Note that the charge/discharge price ratio is a result of division using the other planned electric power price, which is lower one of the one and the other planned electric power prices, as a dividend and the higher one as a divisor.

For example, when the planning unit 3 6C determines (judges) at Step St44 that the charge/discharge price ratio is smaller than the charge/discharge efficiency (YES at Step St44), the planning unit 36C sets the charge control to the other time slot corresponding to the other planned electric power price and sets the discharge control to the one time slot corresponding to the one planned electric power price (Step St45), considering that the economic advantage for the consumer 10 is to be brought.

Meanwhile, for example, when the planning unit 36C determines (judges) at Step St44 that the charge/discharge price ratio is not smaller than the charge/discharge efficiency (NO at Step St44), the planning unit 36C sets the stop control to both the one and the other time slots corresponding to the one and the other planned electric power prices (Step St47), considering that the economic advantage for the consumer 10 is not to be brought.

The planning unit 36C sets control to all the time slots in the second price information S2, reflects these setting results in the charge/discharge plan information S3, and ends the operation.

As described above, the planning unit 36 judges the economic efficiency (economic advantage) that will be brought by charging and discharging of the storage battery 12, for example, based on A3 serving as the planned electric power price (first sale price) in the time slot B3, which is obtained by dividing a day into predetermined time periods (e.g., one hour), A21 serving as the planned electric power price (second sale price) in the time slot B21, which is obtained by dividing a day into the predetermined time periods and is different from the time slot B3, and the charge/discharge efficiency. Based on the judgment result on this economic efficiency, the planning unit 36 determines the charge/discharge plans in the time slots B3 and B21 and creates the charge/discharge plan information S3. Accordingly, the charge/discharge plan of this storage battery 12 can be determined considering the economic efficiency that is to be brought by the charge and discharge of the storage battery 12, based on the charge/discharge efficiency or the like. Further, controlling the charge and discharge of the storage battery 12 based on this charge/discharge plan can improve the economic advantages that are to be brought by charging and discharging of the storage battery 12.

Further, at Step St14, the planning unit 36 determines (judges) whether, for example, the charge/discharge price ratio (A3/A21) of A3, which is lower than A21, to A21, which is higher one of A3 and A21 serving as the planned electric power prices, is smaller than the charge/discharge efficiency or not. For example, when the planning unit 36 determines that the charge/discharge price ratio (A3/A21) is smaller than the charge/discharge efficiency, the planning unit 36 determines the charge/discharge plan such that charge is performed in the time slot B3, which corresponds to A3, and discharge is performed in the time slot B21, which corresponds to A21, among A3 and A21, to create the charge/discharge plan information S3. Thus, the time slot during which the storage battery 12 is charged and the time slot during which the storage battery 12 is discharged are determined in a pair. That is, the charge/discharge plan can be determined such that both charge and discharge of the storage battery 12 are reliably performed, considering the economic efficiency of the storage battery 12.

Alternatively, for example, when the planning unit 36 determines (judges) that the charge/discharge price ratio (A3/A21) is not smaller than the charge/discharge efficiency, the planning unit 36 determines the charge/discharge plan such that neither charge nor discharge of the storage battery 12 is performed in A3 and A21, to create the charge/discharge plan information S3. Thus, when the planning unit 36 judges that the economic advantage is not to be provided, the planning unit 36 can determine the charge/discharge plan such that the storage battery 12 is neither charged nor discharged. Thus, for example, charging and discharging of the storage battery 12 that are not to bring economic advantage can be prevented.

Further, the measuring device M1 receives the first price information S1. In the first price information S1, set are the planned electric power prices A1 to A24 corresponding to the plurality of time slots B1 to B24, which are obtained by dividing a day into the predetermined time periods (e.g., one hour). The planning unit 36 creates the charge/discharge plan information S3 based on the charge/discharge price ratio. The charge/discharge price ratio is calculated using A21 which is the highest price and A3 which is the lowest price among A1 to A24 serving as the plurality of planned electric power prices in the first price information S1 received by the measuring instrument M1. Thus, the charge/discharge plan can be determined such that the storage battery 12 is charged/discharged in a time slot during which the greatest economic advantage is expected in the first price information S1.

Further, the measuring device M1 receives the first price information S1. The planning unit 36C (third embodiment) classifies the combinations in the second price information S2 into the first group and the second group based on the planned electric power prices in the second price information S2, which is based on the first price information S1 received by the measuring device M1. Note that the combinations in the second price information S2 indicate combinations of the time slots in the second price information S2 and the planned electric power prices corresponding to these time slots. The planning unit 36C selects the other planned electric power price from the planned electric power prices in the first group, and selects the one planned electric power price from the planned electric power prices in the second group. Thereafter, the planning unit 36C creates the charge/discharge plan information S3, based on the charge/discharge price ratio calculated using the one and the other planned electric power prices. Thus, the difference can be generated between the one and the other planned electric power prices, depending on how the combinations in the second price information S2 are classified into the first group and the second group. Thus, the charge/discharge plan can be determined such that the economic advantage is increased by virtue of charging and discharging of the storage battery 12.

Further, the charge/discharge efficiency is determined based on the product of the charge efficiency p when electric power is charged to the storage battery 12 and the discharge efficiency ***q*** when the electric power charged to the storage battery 12 is discharged. Thus, the charge/discharge plan of the storage battery 12 can be determined in consideration of the economic efficiency in which both the charge efficiency ***p*** and the discharge efficiency ***q*** have been reflected.

Further, the charge/discharge control device 3 includes the planning unit 36 and the control unit 37. The planning unit 36 creates the charge/discharge plan information S3. The control unit 37 controls charge and discharge of the storage battery 12 based on the charge/discharge plan information S3 created by the planning unit 36. The charge/discharge control device 3 can control charge and discharge of the storage battery 12 considering the economic efficiency based on the charge/discharge efficiency and the like.

Note that the first to third embodiments are simply for facilitating the understanding of the present invention and are not in any way to be construed as limiting the present invention. The present invention may variously be modified or altered without departing from the scope and encompass equivalents thereof.

The first embodiment describes that the first price information S1 indicates the planned electric power prices in every one hour; however, it is note limited thereto. For example, the first price information S1 may indicate the planned electric power prices in every 30 minutes or the like. In the case where the first price information S1 indicates the planned electric power prices in every 30 minutes, the value of the variable K is from 1 to 24.

Further, the first embodiment describes that the charge/discharge device 11 determines the maximum electric energy of the electric power supplied from the consumer 10 to the distribution line L1 in the range in which the adverse current does not occur; however, it is not limited thereto. For example, the maximum electric energy that can be supplied from the consumer 10 to the distribution line L1 may be predetermined in the range in which the adverse current is not caused, based on a power flow calculation in the distribution system 100 or the like.

Further, the first embodiment describes that, in the first price information S1, the prices of the electric power for sale is the same as the prices of the electric power for purchase; however, it is not limited thereto. For example, the price of the electric power for sale and the price of the electric power for purchase in the same time slot may be different from each other. In this case, a configuration may be such that, when the discharge control is performed at Step St22, the charge/discharge control device 3 determines whether the economic advantage will be brought by discharge or not, based on the charged amount of the storage battery 12 and the power consumption of the load R1, and when the charge/discharge control device 3 determines that the economic advantage will be brought, the charge/discharge control device 3 outputs the control signal Ct for discharging the storage battery 12. Note that, for example, a configuration may be such that, when the price of the electric power for sale is higher than the price of the electric power for purchase and the electric energy larger than the power consumption of the load R1 can be discharged from the storage battery 12, the charge/discharge control device 3 determines that the economic advantage will be provided. For example, a configuration may be such that, when the price of the electric power for sale is lower than the price of the electric power for purchase, the charge/discharge control device 3 determines that the economic advantage will not be provided.

Further, a configuration may be made such that, when discharge control is performed at Step St22, the electric power output from the storage battery 12 is supplied to the load R1 and the charge/discharge device 11 discharges the storage battery 12 within a range in which an adverse current from the consumer 10 to the distribution line L1 does not occur. In this case, the electric energy of the electric power for purchase can be reduced, resulting in the economic advantage being brought to the consumer 10.

Further, the second embodiment may omit the rearrangement at Step St32 (Fig. 11). In this case, at Steps St33 and St34, the operations are performed based on the first price information S1.

Further, the second embodiment describes that, after the one planned electric power price is selected at Step St33, the other planned electric power price is searched at Step St34; however, it is not limited thereto. For example, a configuration may be such that, after the other planned electric power price is selected at Step St33, the one planned electric power price is searched at Step St34.

Further, the third embodiment describes that the other planned electric power price is selected from the planned electric power prices in the first group and the one planned electric power price is selected from the planned electric power prices in the second group at Step St43; however, it is not limited thereto. For example, a configuration may be such that, regardless of the first or the second group, the planning unit 36C selects two planned electric power prices different from each other in the second price information S2 as the one and the other planned electric power prices. In this case, since the difference generated between the two planned electric power prices, it is possible to determine the charge/discharge plan of the storage battery 12 such that the economic advantage when the storage battery 12 is charged/discharged is to be increased.

### [Reference Signs List]

3, 3B, 3C charge/discharge control device
12 storage battery
36, 36B, 36C planning unit
37 control unit

## Claims

1. A storage-battery charge/discharge planning device, comprising:
a judging device configured to judge economic efficiency to be brought by charging and discharging of a storage battery, based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot; and
a determining device configured to determine a charge/discharge plan of the storage battery in the first and the second time slots based on a judgment result of the judging device.

2. The storage-battery charge/discharge planning device according to claim 1, wherein:
the judging device is configured to judge whether a ratio of an other sale price to one sale price is smaller than the charge/discharge efficiency or not, the one sale price being higher one of the first and the second sale prices, the other sale price being lower than the one sale price in the first and the second sale prices, and
the determining device is configured to, when the judging device judges that the ratio is smaller than the charge/discharge efficiency, determine the charge/discharge plan such that the storage battery is discharged in one time slot and the storage battery is charged in an other time slot, the one time slot corresponding to the one sale price in the first and the second time slots, the other time slot corresponding to the other sale price in the first and the second time slots.

3. The storage-battery charge/discharge planning device according to claim 2, wherein
the determining device is configured to, when the judging device judges that the ratio is not smaller than the charge/discharge efficiency, determine the charge/discharge plan such that the storage battery is neither charged nor discharged in the one and the other time slots.

4. The storage-battery charge/discharge planning device according to claim 1, further comprising:
a receiving device configured to receive price information in which sale prices of the electric power are set in a plurality of time slots, respectively, the time slots being obtained by dividing the day into the predetermined time periods, wherein
the judging device is configured to make a judgment, with a pair of time slots being set as the first and the second time slots, respectively, the pair of time slots corresponding to a pair of sale prices different from each other among the sale prices in the price information.

5. The storage-battery charge/discharge planning device according to claim 1, further comprising:
a receiving device configured to receive price information in which sale prices of the electric power are set in a plurality of time slots, respectively, the time slots being obtained by dividing the day into the predetermined time periods, wherein
the judging device is configured to make a judgment, with a time slot corresponding to a highest price among the sale prices in the price information being set as the first time slot, and with a time slot corresponding to a lowest price among the sale prices in the price information being set as the second time slot.

6. The storage-battery charge/discharge planning device according to claim 1, further comprising:
a receiving device configured to receive price information in which sale prices of the electric power are set in a plurality of time slots, respectively, the time slots being obtained by dividing the day into the predetermined time periods, wherein
the judging device is configured to make a judgment, with a time slot in a first group among the plurality of time slots in the price information being set as the first time slot, and with a time slot in a second group among the plurality of time slots in the price information being set as the second time slot , the plurality of time slots being classified into the first group and the second group based on the sale prices.

7. The storage-battery charge/discharge planning device according to claim 1, wherein
the charge/discharge efficiency is determined based on a product of a charge efficiency when the storage battery is charged and a discharge efficiency when the storage battery is discharged.

8. Amethod for planning charge/discharge of a storage battery, the method comprising:
a first step of judging economic efficiency to be brought by charging and discharging of the storage battery based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot; and
a second step of determining a charge/discharge plan of the storage battery in the first and the second time slots based on a judgment result obtained by the first step.

9. A program causing a charge/discharge planning device of a storage battery to realize:
a first function of judging economic efficiency to be brought by charging and discharging of the storage battery based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot; and
a second function of determining a charge/discharge plan of the storage battery in the first and the second time slots based on a judgment result obtained by the first function.

10. A storage-battery charge/discharge device, comprising:
a judging device configured to judge economic efficiency to be brought by charging and discharging of a storage battery based on a first sale price of electric power in a first time slot, a second sale price of the electric power in a second time slot, and charge/discharge efficiency of the storage battery, the first time slot being obtained by dividing a day into predetermined time periods, the second time slot being obtained by dividing the day into the predetermined time periods and being different from the first time slot;
a determining device configured to determine a charge/discharge plan of the storage battery in the first and the second time slots based on a judgment result of the judging device; and
a control unit configured to control charging and discharging of the storage battery based on the charge/discharge plan determined by the determining device.
